# EUROPÄISCHE PATENTANMELDUNG

(11) **EP 2 018 993 A2**
(43) Veröffentlichungstag der Anmeldung: **28.01.2009**
(21) Anmeldenummer: 08104830.8
(22) Anmeldetag: 22.07.2008
(51) Int. Cl.: B60L 1/00

(54) **Fahrzeug und Verfahren zu dessen Betrieb**

(30) Priorität: 24.07.2007 DE 102007034395
(71) Anmelder: Siemens Aktiengesellschaft, 80333 München (DE)
(72) Erfinder: Jacobi von Wangelin, Frank, 91058, Erlangen (DE); Löwenstein, Lars, 91093, Heßdorf (DE)

(57) **Zusammenfassung**

Die Erfindung bezieht sich u. a. auf ein Fahrzeug mit mindestens einer permanenterregten Maschine (70) als Antriebsmotor und einer elektrischen Ansteuerschaltung (50) zum Einspeisen von Antriebsenergie in die permanenterregte Maschine während des Fahrbetriebs.

Erfindungsgemäß ist vorgesehen, dass zwischen die Ansteuerschaltung (50) und die permanenterregte Maschine (70) eine Schaltereinrichtung (60) geschaltet ist, mit der sich die Ansteuerschaltung (50) und die permanenterregte Maschine (70) für den Fahrbetrieb elektrisch miteinander verbinden lassen und für ein Abschleppen des Fahrzeugs voneinander trennen lassen, und dass an die Schaltereinrichtung (60) mittelbar oder unmittelbar eine Verbrauchseinrichtung (120) angeschlossen ist, die sich durch die Schaltereinrichtung (60) mit der permanenterregten Maschine (70) während eines Abschleppens des Fahrzeugs elektrisch verbinden lässt.

## Beschreibung

Die Erfindung bezieht sich auf ein Fahrzeug mit mindestens einer permanenterregten Maschine als Antriebsmotor und einer elektrischen Ansteuerschaltung zum Einspeisen von Antriebsenergie in die permanenterregte Maschine während des Fahrbetriebs.

Derartige Fahrzeuge sind beispielsweise aus dem Bereich des Schienenverkehrs bekannt und dienen dort als Lokomotiven oder Triebzüge.

Der Erfindung liegt die Aufgabe zugrunde, ein Fahrzeug der angegebenen Art dahingehend zu verbessern, dass dieses während eines Abschleppens, also beispielsweise im Falle eines Fahrzeugdefekts oder im Falle einer Überführungsfahrt, ein besseres Betriebsverhalten aufweist als bisherige Fahrzeuge.

Diese Aufgabe wird erfindungsgemäß durch ein Fahrzeug mit den Merkmalen des Anspruchs 1 gelöst. Vorteilhafte Ausgestaltungen des erfindungsgemäßen Fahrzeugs sind in Unteransprüchen angegeben.

Danach ist erfindungsgemäß vorgesehen, dass zwischen die Ansteuerschaltung und die permanenterregte Maschine eine Schaltereinrichtung geschaltet ist, mit der sich die Ansteuerschaltung und die permanenterregte Maschine für den Fahrbetrieb elektrisch miteinander verbinden lassen und für ein Abschleppen des Fahrzeugs voneinander trennen lassen, und dass an die Schaltereinrichtung mittelbar oder unmittelbar eine Verbrauchseinrichtung angeschlossen ist, die sich durch die Schaltereinrichtung mit der permanenterregten Maschine während eines Abschleppens des Fahrzeugs elektrisch verbinden lässt.

Ein wesentlicher Vorteil des erfindungsgemäßen Fahrzeugs ist darin zu sehen, dass dieses auch während eines Abschleppvorgangs - im Falle eines Fahrzeugdefekts - sehr betreiberfreundlich ist. Erfindungsgemäß weist das Fahrzeug nämlich neben dem durch die Ansteuerschaltung gebildeten Einspeise- bzw. Normalbetriebszweig auch einen Notzweig bzw. Generatorzweig für den Abschleppbetrieb des Fahrzeugs auf. Dieser Notzweig bzw. Generatorzweig kann durch die erfindungsgemäß vorgesehene Schaltereinrichtung mit der permanenterregten Maschine verbunden werden. Ist das Fahrzeug nämlich defekt, so wird der elektrische Einspeisezweig unter Umständen nicht mehr geeignet sein, um die zum Abschleppbetrieb nötigen oder hilfreichen elektrischen Verbrauchseinrichtungen, wie beispielsweise Kühleinrichtungen, betreiben zu können. An dieser Stelle setzt die Erfindung an, indem erfindungsgemäß ein zusätzlicher Notzweig vorgesehen wird, der während des Abschleppens des Fahrzeugs elektrisch von der permanenterregten Maschine gespeist wird und zumindest eine, für den Abschleppbetrieb vorzugsweise hilfreiche, elektrische Verbrauchseinrichtung umfasst. Durch die erfindungsgemäß vorgesehene Schaltereinrichtung lässt sich also die permanenterregte Maschine während des Abschleppbetriebs als Generator verwenden, dessen Ausgangsenergie zum Speisen des Notzweigs bzw. Generatorzweigs und damit zum Betreiben zumindest einer Verbrauchseinrichtung herangezogen wird.

Wird eine permanenterregte Maschine mechanisch angetrieben, wie dies beim Abschleppen der Fall ist, dann wird in den Wicklungen der Maschine eine elektrische Spannung induziert, die drehzahlabhängig ist und an den Motorklemmen anliegt. Darüber hinaus werden in der permanenterregten Maschine jedoch auch Wirbelstrom- und Ummagnetisierungsverluste im Ständer der Maschine, insbesondere im Ständerblock, hervorgerufen. Wenn die permanenterregte Maschine nicht wassergekühlt bzw. forciert belüftet wird, so muss die maximale Abschleppgeschwindigkeit beim Abschleppen des Fahrzeugs reduziert bzw. begrenzt werden, um ein Überhitzen der Maschine zu vermeiden. Um eine solche Begrenzung der Abschleppgeschwindigkeit zu umgehen, ist gemäß einer vorteilhaften Ausgestaltung des Fahrzeugs vorgesehen, als Verbrauchseinrichtung eine Kühleinrichtung vorzusehen, die geeignet ist, im Abschleppbetrieb des Fahrzeugs die Maschine zu kühlen. Der Gedanke bei dieser vorteilhaften Ausgestaltung besteht also darin, den elektrischen Notzweig bzw. den elektrischen Abschleppzweig dafür zu nutzen, die Maschine zu kühlen, damit die während des Abschleppens aufgrund der induzierten Verluste im Ständer der Maschine auftretende Erwärmung gezielt abgeführt wird.

Zum Kühlen der Maschine kann beispielsweise ein Lüfter bzw. Ventilator verwendet werden, mit dem die Maschine durch einen Luftstrom gekühlt wird. Alternativ kann als Verbrauchseinrichtung auch eine Umwälzpumpe verwendet werden, mit der eine die Maschine kühlende Kühlflüssigkeit umgewälzt wird.

Bei der permanenterregten Maschine des Fahrzeugs kann es sich beispielsweise um eine permanenterregte Synchronmaschine, eine permanenterregte Transversalflussmaschine oder eine permanenterregte Transversalfluss-Reluktanz-Maschine handeln.

Die Schaltereinrichtung kann beispielsweise mechanisch agierende Schalter und/oder elektronisch agierende Schalter aufweisen, zum Beispiel Transistoren, z. B. IGBT's (Insulated Gate Bipolar Transistoren), oder Thyristoren, z. B. GTO's (Gate turn-off Thyristoren).

Die Schaltereinrichtung zum Umschalten von Einspeisezweig auf den Abschlepp- bzw. Notzweig - bzw. umgekehrt - kann beispielsweise eine erste Schalteinheit und eine zweite Schalteinheit umfassen, wobei die erste Schalteinheit zwischen die Ansteuerschaltung und die Maschine und die zweite Schalteinheit zwischen die Maschine und die elektrische Verbrauchseinrichtung geschaltet ist.

Bei dem Fahrzeug kann es sich - wie eingangs bereits erwähnt - beispielsweise um ein Schienenfahrzeug wie beispielsweise eine Lokomotive oder ein Triebzug handeln.

Die Erfindung bezieht sich darüber hinaus auf ein Verfahren zum Betreiben eines Fahrzeugs mit einer permanenterregten Maschine als Antriebsmotor und einer elektrischen Ansteuerschaltung, mit der während des normalen Fahrbetriebs Fahrenergie in die Maschine eingespeist wird.

Erfindungsgemäß ist bezüglich eines solchen Verfahrens vorgesehen, dass im Falle eines Abschleppbetriebs des Fahrzeugs die permanenterregte Maschine als Generator betrieben wird und deren elektrische Energie in eine Verbrauchseinrichtung eingespeist wird.

Bezüglich der Vorteile des erfindungsgemäßen Verfahrens und bezüglich vorteilhafter Ausgestaltungen des erfindungsgemäßen Verfahrens sei auf die obigen Ausführungen im Zusammenhang mit dem erfindungsgemäßen Fahrzeug verwiesen, da die Vorteile des erfindungsgemäßen Fahrzeugs denen des erfindungsgemäßen Verfahrens im Wesentlichen entsprechen.

Die Erfindung wird nachfolgend anhand von Ausführungsbeispielen näher erläutert; dabei zeigen beispielhaft:
- Figur 1: ein erstes Ausführungsbeispiel für ein erfindungsgemäßes Fahrzeug, anhand dessen auch das erfindungsgemäße Verfahren beispielhaft erläutert wird,
- Figur 2: ein zweites Ausführungsbeispiel für ein erfindungsgemäßes Fahrzeug mit einem gegenüber dem ersten Ausführungsbeispiel abgeänderten Not- bzw. Abschleppzweig,
- Figur 3: ein drittes Ausführungsbeispiel für ein erfindungsgemäßes Fahrzeug mit einem wiederum anderen Not- bzw. Abschleppzweig und
- Figur 4: ein viertes Ausführungsbeispiel für ein erfindungsgemäßes Fahrzeug, bei dem im Not- bzw. Abschleppzweig ein Transformator angeordnet ist.

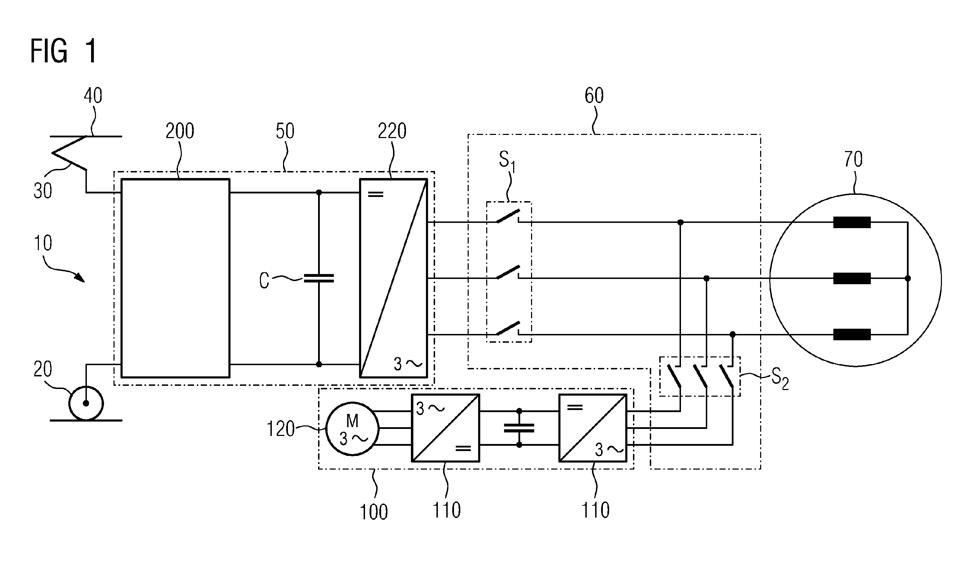

In den Figuren 1 bis 4 werden der Übersicht halber für identische oder vergleichbare Komponenten stets dieselben Bezugszeichen verwendet.

In der Figur 1 erkennt man ein Schienenfahrzeug 10, von dem der Übersicht halber in der Figur 1 lediglich ein Rad 20 sowie ein elektrischer Stromabnehmer 30 zum Anschluss an einen nicht weiter dargestellten Fahrdraht 40 gezeigt sind.

An den Stromabnehmer 30 sowie an das Rad 20 elektrisch angeschlossen ist eine Ansteuerschaltung 50, die über eine Schalteinrichtung 60 mit einem Antriebsmotor in Form einer permanenterregten Maschine 70, beispielsweise einer permanenterregten Synchronmaschine, Transversalflussmaschine oder Transversalfluss-Reluktanz-Maschine, verbunden ist. Die Ansteuerschaltung 50 sowie die Schalteinrichtung 60 bilden für die Maschine 70 einen Einspeisezweig, der während des normalen Fahrbetriebs zum Betrieb des Schienenfahrzeugs 10 verwendet wird.

In der Figur 1 erkennt man darüber hinaus einen Not- bzw. Abschleppzweig 100, der ebenfalls an die Schalteinrichtung 60 und somit an die Maschine 70 angeschlossen ist. Der Not- bzw. Abschleppzweig 100 weist eine Umrichtereinheit 110 sowie eine daran angeschlossene Verbrauchseinrichtung 120 auf. Die Verbrauchseinrichtung 120 ist somit mit der Maschine 70 nicht unmittelbar, sondern lediglich mittelbar verbunden.

Das Fahrzeug 10 gemäß Figur 1 lässt sich beispielsweise wie folgt betreiben:

Während des normalen Fahrbetriebs, wenn das Schienenfahrzeug 10 also durch Energie, die über den Stromabnehmer 40 in das Schienenfahrzeug 10 eingespeist wird, angetrieben wird, wird die Maschine 70 mit der Ansteuerschaltung 50 verbunden und von dieser angesteuert. Hierzu ist die Ansteuerschaltung 50 mit einer Eingangsschaltung 200, einem Zwischenkreiskondensator C sowie einem Wechselrichter 220 ausgestattet.

Um ein Einspeisen der Fahrenergie von dem Stromabnehmer 40 in die Maschine 70 zu ermöglichen, ist eine erste Schalteinheit S1 der Schalteinrichtung 60 geschlossen, so dass die Maschine 70 mit dem Wechselrichter 220 der Ansteuerschaltung 50 elektrisch verbunden wird. Da im Normalbetrieb der Not- bzw. Abschleppzweig 100 nicht benötigt wird, ist eine zweite Schalteinheit S2 der Schalteinrichtung 60 geöffnet, so dass weder die Umrichtereinheit 110 noch die Verbrauchseinrichtung 120 mit der Maschine 70 verbunden sind.

Ist das Schienenfahrzeug 10 nun defekt, beispielsweise weil die Ansteuerschaltung 50 einen Fehler aufweist, so muss das Schienenfahrzeug 10 unter Umständen abgeschleppt werden. Für diesen Abschleppbetrieb wird die Schalteinrichtung 60 umgeschaltet, indem die erste Schalteinheit S1, die beispielsweise durch einen mechanischen Schalter oder einen elektronischen Schalter gebildet ist, abgeschaltet wird. Dies führt dazu, dass die Maschine 70 elektrisch von dem Wechselrichter 220 der Ansteuerschaltung 50 getrennt wird. Außerdem, also bereits vorher, gleichzeitig oder anschließend, wird die zweite Schalteinheit S2, die beispielsweise ebenfalls durch einen mechanischen Schalter oder einen elektronischen Schalter gebildet ist, der Schalteinrichtung 60 eingeschaltet, so dass die Umrichtereinheit 110 sowie die Verbrauchseinrichtung 120 an die Maschine 70 angeschlossen werden. Die Maschine 70 wird im Abschleppbetrieb elektrische Spannung erzeugen, die über die Umrichtereinheit 110 in die Verbrauchseinrichtung 120 eingespeist wird.

Handelt es sich bei der Verbrauchseinrichtung 120 beispielsweise um eine Kühleinrichtung, so kann die von der Maschine 70 erzeugte Energie von der Verbrauchseinrichtung 120 dazu verwendet werden, die Maschine 70 zu kühlen. Die Verbrauchseinrichtung 120 wird hierzu beispielsweise durch einen Lüfter, Ventilator oder eine Umwälzpumpe oder ein sonstiges Kühlsystem gebildet. Durch das Kühlen der Maschine 70 während des Abschleppens wird sichergestellt, dass es zu keinem Überhitzen der Maschine 70 kommen kann. Ein solches Überhitzen würde nämlich beispielsweise auftreten können, wenn das Schienenfahrzeug mit einer zu hohen Geschwindigkeit abgeschleppt wird und die in dem Ständer der Maschine 70 erzeugten Wirbelstromverluste zu einer unzulässig hohen Erwärmung der Maschine führen. Mit anderen Worten dient die Verbrauchseinrichtung 120 also vorzugsweise dazu, im Abschleppbetrieb eine Begrenzung der Abschleppgeschwindigkeit zu vermeiden, die andernfalls im Falle ohne Kühlung einzuhalten wäre.

Neben der Verbrauchseinrichtung 120 können selbstverständlich auch andere elektrische Verbraucher an die Maschine 70 angeschaltet werden, um den Abschleppbetrieb zu unterstützen. Beispielsweise können eine Beleuchtungseinrichtung oder eine Klimaanlage des Schienenfahrzeugs durch die Maschine 70 gespeist werden.

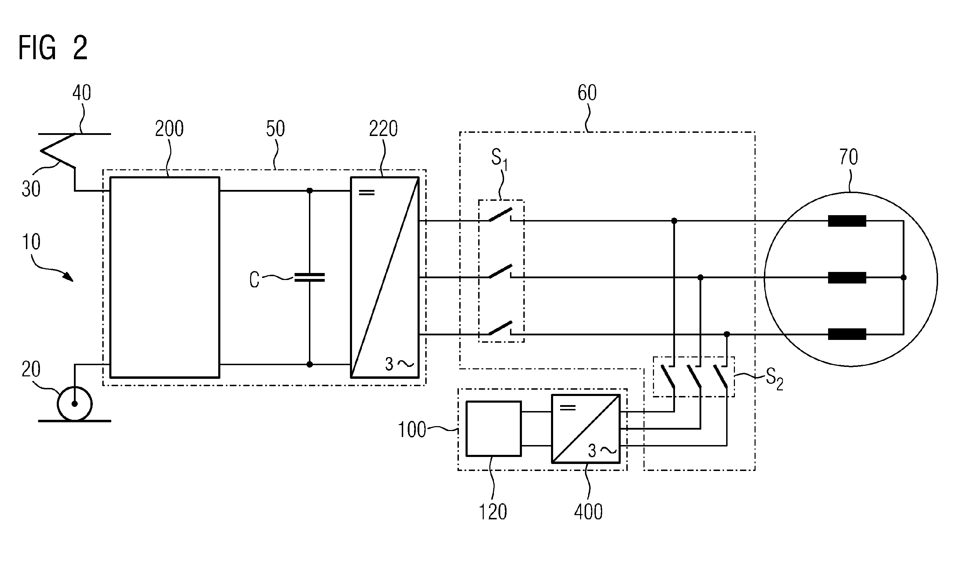

In der Figur 2 ist ein zweites Ausführungsbeispiel für ein Fahrzeug 10 dargestellt. Im Unterschied zu dem ersten Ausführungsbeispiel gemäß Figur 1 ist der Not- bzw. Abschleppzweig 100 anders ausgestaltet. Konkret ist die Verbrauchseinrichtung 120 über einen Gleichrichter 400 an die zweite Schalteinheit S2 der Schalteinrichtung 60 angeschlossen; eine Umrichtereinheit wie beim ersten Ausführungsbeispiel gemäß Figur 1 ist somit nicht vorhanden. Ansonsten entspricht das zweite Ausführungsbeispiel gemäß Figur 2 dem ersten Ausführungsbeispiel gemäß Figur 1.

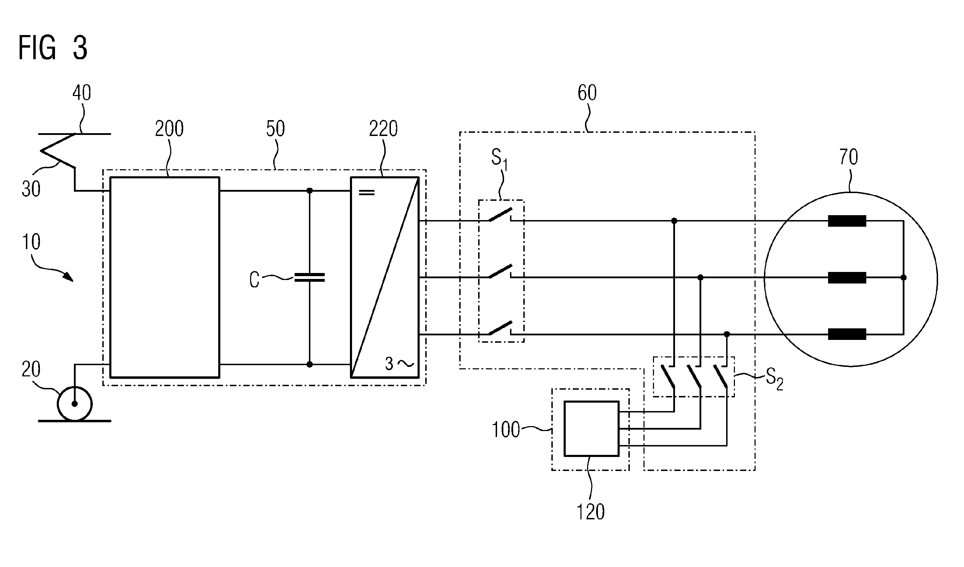

In der Figur 3 ist ein drittes Ausführungsbeispiel für ein Fahrzeug gezeigt. Bei diesem Ausführungsbeispiel ist die Verbrauchseinrichtung 120 elektrisch unmittelbar an die zweite Schalteinheit S2 der Schalteinrichtung 50 angeschlossen und wird somit im Falle eines Abschleppens des Schienenfahrzeugs durch die Maschine 70 unmittelbar mit Wechselstrom beaufschlagt bzw. betrieben.

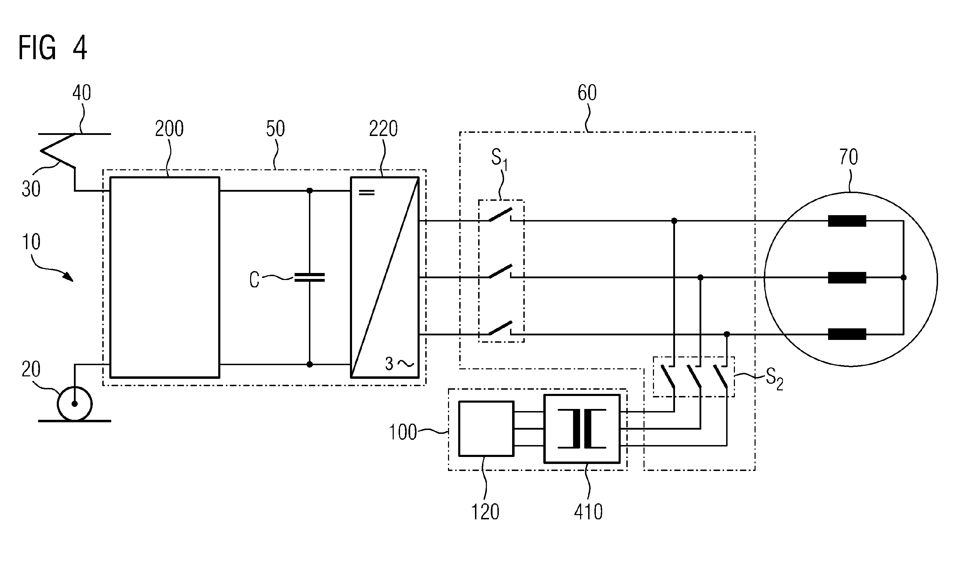

In der Figur 4 ist ein viertes Ausführungsbeispiel für ein Fahrzeug dargestellt. Bei dem vierten Ausführungsbeispiel ist die Verbrauchseinrichtung 120 über einen Transformator 410 an die zweite Schalteinheit S2 der Schalteinrichtung 60 angeschlossen. Im Übrigen entspricht das vierte Ausführungsbeispiel den übrigen Ausführungsbeispielen gemäß den Figuren 1 bis 3.

## Patentansprüche

1. Fahrzeug (10) mit mindestens einer permanenterregten Maschine (70) als Antriebsmotor und einer elektrischen Ansteuerschaltung (50) zum Einspeisen von Antriebsenergie in die permanenterregte Maschine während des Fahrbetriebs, **dadurch gekennzeichnet,**
- **dass** zwischen die Ansteuerschaltung (50) und die permanenterregte Maschine (70) eine Schaltereinrichtung (60) geschaltet ist, mit der sich die Ansteuerschaltung (50) und die permanenterregte Maschine (70) für den Fahrbetrieb elektrisch miteinander verbinden lassen und für ein Abschleppen des Fahrzeugs voneinander trennen lassen, und
- **dass** an die Schaltereinrichtung (60) mittelbar oder unmittelbar eine Verbrauchseinrichtung (120) angeschlossen ist, die sich durch die Schaltereinrichtung (60) mit der permanenterregten Maschine (70) während eines Abschleppens des Fahrzeugs elektrisch verbinden lässt.

2. Fahrzeug nach Anspruch 1, **dadurch gekennzeichnet, dass** die elektrische Verbrauchseinrichtung (120) eine Kühleinrichtung aufweist, die geeignet ist, während ihres Betriebs die permanenterregte Maschine (70) zu kühlen.

3. Fahrzeug nach Anspruch 2, **dadurch gekennzeichnet, dass** die Kühleinrichtung einen Lüfter aufweist.

4. Fahrzeug nach einem der voranstehenden Ansprüche 2-3, **dadurch gekennzeichnet, dass** die Kühleinrichtung eine Umwälzpumpe zum Umwälzen einer Kühlflüssigkeit aufweist.

5. Fahrzeug nach einem der voranstehenden Ansprüche, **dadurch gekennzeichnet, dass** die Schaltereinrichtung (60) eine erste Schalteinheit (S1) und eine zweite Schalteinheit (S2) umfasst, wobei die erste Schalteinheit (S1) zwischen die Ansteuerschaltung (50) und die permanenterregte Maschine (70) und die zweite Schalteinheit (S2) zwischen die permanenterregte Maschine (70) und die elektrische Verbrauchseinrichtung (120) geschaltet ist.

6. Fahrzeug nach einem der voranstehenden Ansprüche, **dadurch gekennzeichnet, dass** das Fahrzeug ein Schienenfahrzeug (10) ist.

7. Verfahren zum Betreiben eines Fahrzeugs (10) mit mindestens einer permanenterregten Maschine (70) als Antriebsmotor und einer elektrischen Ansteuerschaltung (50), mit der während des normalen Fahrbetriebs Fahrenergie in die Maschine eingespeist wird, **dadurch gekennzeichnet, dass** im Falle eines Abschleppbetriebs des Fahrzeugs die permanenterregte Maschine als Generator betrieben wird und deren elektrische Energie in eine Verbrauchseinrichtung (120) eingespeist wird.

8. Verfahren nach Anspruch 7, **dadurch gekennzeichnet, dass** im Falle eines Abschleppbetriebs des Fahrzeugs die Ansteuerschaltung (50) und die Maschine (70) elektrisch voneinander getrennt werden.

9. Verfahren nach einem der voranstehenden Ansprüche 7-8, **dadurch gekennzeichnet, dass** als elektrische Verbrauchseinrichtung (120) eine Kühleinrichtung gespeist wird und mit dieser die Maschine (70) gekühlt wird.

10. Verfahren nach Anspruch 9, **dadurch gekennzeichnet, dass** die Maschine mit einem Lüfter gekühlt wird.

11. Verfahren nach einem der voranstehenden Ansprüche 9-10, **dadurch gekennzeichnet, dass** mit der Energie der Maschine eine Umwälzpumpe betrieben wird und mit dieser eine die Maschine kühlende Kühlflüssigkeit umgewälzt wird.

12. Verfahren nach einem der voranstehenden Ansprüche 7-11, **dadurch gekennzeichnet, dass** für den Abschleppbetrieb oder im Abschleppbetrieb mit einer ersten Schalteinheit (S1) die Ansteuerschaltung (50) und die Maschine (70) elektrisch voneinander getrennt und mit einer zweiten Schalteinheit (S2) die Maschine (70) und die Verbrauchseinrichtung (120) elektrisch miteinander verbunden werden.

13. Verfahren nach einem der voranstehenden Ansprüche 7-12, **dadurch gekennzeichnet, dass** als Fahrzeug ein Schienenfahrzeug (10) betrieben wird.
